# EUROPÄISCHE PATENTSCHRIFT

(11) **EP 0 905 609 B1**
(45) Veröffentlichungstag und Bekanntmachung des Hinweises auf die Patenterteilung: **14.05.2003**
(21) Anmeldenummer: 98117837.9
(22) Anmeldetag: 21.09.1998
(51) Int. Cl.: G06F 5/01, G06F 5/00

(54) **Schieberegisteranordnung zur wahlweisen Verabeitung von unterschiedlich langen Eingangsdatenworten.**
Shiftregister arrangement selectively processing variable length input data words
Dispositif à régistre à décalage permettant de traiter sélectivement des mots de données d'entrées de longueurs différentes

(30) Priorität: 30.09.1997 DE 19743273
(43) Veröffentlichungstag der Anmeldung: 31.03.1999
(73) Patentinhaber: Infineon Technologies AG, 81669 München (DE)
(72) Erfinder: Sehrig, Peter, 82343 Pöcking (DE); Wilwert, Jean, 40489 Düsseldorf (DE)
(74) Vertreter: Epping Hermann & Fischer

(56) Entgegenhaltungen:
- EP-A- 0 098 153
- EP-A- 0 180 793
- EP-A- 0 390 310
- US-A- 5 079 548

## Beschreibung

Die Erfindung betrifft eine Registeranordnung zur wahlweisen Verarbeitung von unterschiedlich langen Eingangsdatenworten.

Die Erfindung findet beispielsweise Verwendung bei integrierten Bausteinen für GSM.

Bei integrierten Schaltkreisen, die über einen Bus; beispielsweise einen 3-Leiter-Bus, miteinander verbunden sind, ist es erforderlich, daß die Wortlänge des Busses mit denen der integrierten Schaltkreise übereinstimmt. Üblich sind hier Wörter mit einer Länge von 8, 16 oder 24 Bit.

Bisher wurde die Anpassung der Wortlänge zwischen Bus und integriertem Baustein hardwaremäßig vorgenommen, indem bei der Bausteinentwicklung die Schieberegister- und Datenregisterlängen an die Länge der Eingangsworte angepaßt wurden.

Eine Aufgabe der Erfindung ist es, eine Registeranordnung anzugeben, bei der die Anpassung der Verarbeitung an die Länge der Eingangsworte softwaremäßig, das heißt während des Betriebs, einstellbar ist.

Der Aufgabe der Erfindung wird durch eine Registeranordnung gemäß Patentanspruch 1 gelöst.

Die erfindungsgemäße Registeranordnung weist ein erstes Schieberegister und ein Steuerschieberegister auf, die ein Eingangsschieberegister bilden. Am Dateneingang des Eingangsschieberegisters sind Daten mit verschiedenen Wortlängen anlegbar. Weiterhin ist ein Ausgangsregister vorgesehen, welches mit dem Ausgang des Eingangsschieberegisters verbunden ist. Die Speichertiefe des Ausgangsregisters ist gleich der Speichertiefe des Eingangsschieberegisters ohne Steuerschieberegister.

Vorteilhafte Weiterbildungen ergeben sich aus den abhängigen Patentansprüchen.

So ist in einer Ausführungsform ein zweites und ein drittes Schieberegister im Eingangsschieberegister vorgesehen. Weiterhin ist ein erstes, ein zweites und ein drittes Datenregister im Ausgangsregister vorgesehen. Zusätzlich ist eine Umschalteinheit vorgesehen, die wahlweise das erste oder das zweite Schieberegister mit den zweiten Datenregister verbindet. Das erste Schieberegister ist mit dem ersten Datenregister und über die Umschalteinheit mit dem zweiten Datenregister verbunden. Das zweite Schieberegister ist ebenfalls über die Umschalteinheit mit dem zweiten Datenregister verbunden. Die Umschalteinheit wird über das Steuerschieberegister gesteuert. Das dritte Schieberegister ist mit dem dritten Datenregister verbunden.

Das Steuerschieberegister kann zur Auswahl des integrierten Schaltkreises, des Registerblocks im integrierten Schaltkreis und zur Programmierung der Registeranordnung auf die am Dateneingang vorherrschende Wortlänge dienen.

Die Registeranordnung kann in einem Mobilfunksystem, welches einen oder mehrere integrierte Bausteine und einen Bus umfaßt, verwendet werden.

Die Erfindung wird im folgenden anhand von zwei Figuren weiter erläutert.
- Figur 1: zeigt eine Ausführungsform einer Registeranordnung zur Verarbeitung von am Dateneingang anliegenden Daten mit verschiedenen Wortlängen.
- Figur 2: zeigt eine Ausführungsform der erfindungsgemäßen Registeranordnung zur Verarbeitung von am Dateneingang anliegenden Daten mit verschiedenen Wortlängen.

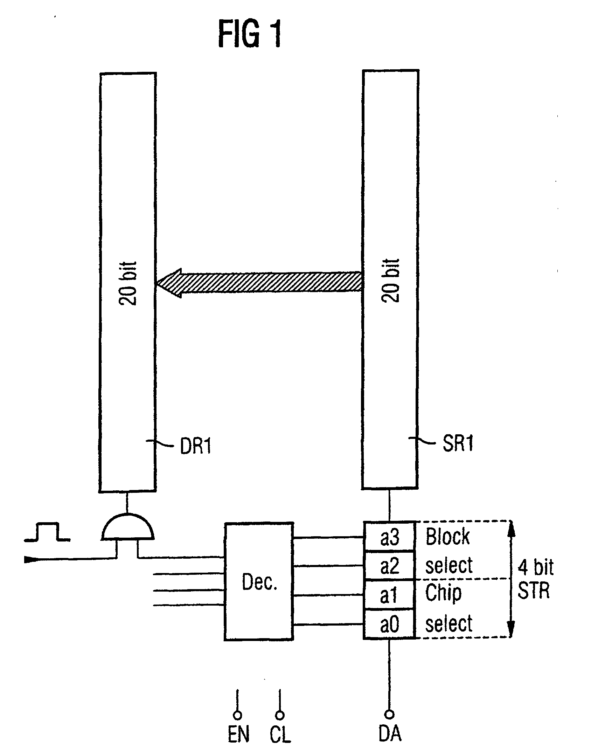

In Figur 1 ist eine Ausführungsform gezeigt, die ein Eingangsschieberegister mit einer Speichertiefe von 24 Bits aufweist. Das Eingangsschieberegister ist in ein 4-Bit-Steuerschieberegister STR und ein 20-Bit-Schieberegister SR1 aufgeteilt. Die 4-Bits a0, a1, a2 und a3 im Steuerschieberegister STR dienen zur Auswahl des gewünschten integrierten Schaltkreises (Chip select) bzw. zur Auswahl des gewünschten Registerblocks (Block select). Das Eingangsschieberegister ist über den Dateneingang DA mit dem Bus, beispielsweise einem 3-Leiter-Bus (in der Figur nicht gezeigt) verbunden. Die Datenwörter werden über den Dateneingang DA seriell in das Eingangsschieberegister, gesteuert durch den Takt, der am Takteingang CL anliegt, geschoben. Sobald ein entsprechendes Freigabesignal über den Eingang EN (enable) vorliegt, werden die Daten aus dem 20-Bit breiten Schieberegister SR1 in ein Datenregister DR1 transportiert.

Die Ansteuerung und Auswertung der in dem Steuerregister STR befindlichen Daten erfolgt über eine Decodiereinheit Dec.

Durch die vorgeschlagene Lösung kann per Softwaresteuerung sowohl ein 24-Bit als auch ein 16-Bit langes Wort verarbeitet werden. Dadurch ist eine Unabhängigkeit von der Datenwortlänge, die am Dateneingang DA vorherrscht gegeben.

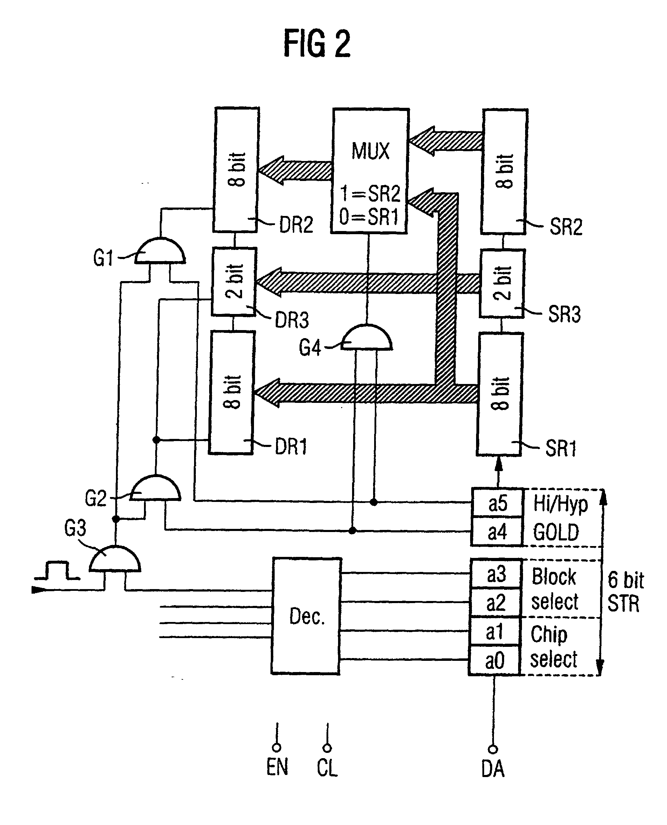

In Figur 2 ist das 24-Bit-Eingangsschieberegister aufgeteilt in ein 6-Bit breites Steuerregister STR, ein erstes Schieberegister SR1, welches eine Speichertiefe von 8 Bit aufweist, ein zweites Schieberegister SR2, welches ebenfalls eine Speichertiefe von 8 Bit aufweist und ein drittes Schieberegister SR3, welches eine Speichertiefe von 2 Bit aufweist. Über den Dateneingang DA des Eingangsschieberegisters werden die Datenbits seriell zuerst in das Steuerschieberegister STR, anschließend in das erste Schieberegister SR1, das dritte Schieberegister SR3 und schließlich in das zweite Schieberegister SR2 geschoben.

Ebenfalls wie in Figur 1 dienen die Bits a0, a1, a2 und a3 des 6-Bit-Steuerregisters STR zur Einstellung des gewünschten integrierten Schaltkreises (Chip select) und zur Einstellung des gewünschten Registerblocks (Block select). Zusätzlich kann über die Bits a4 und a5 die Wortlänge des am Dateneingang DA anliegenden Worts eingestellt werden. Die Inhalte der Bits a4 und a5 können gemäß folgender Tabelle verwendet werden.

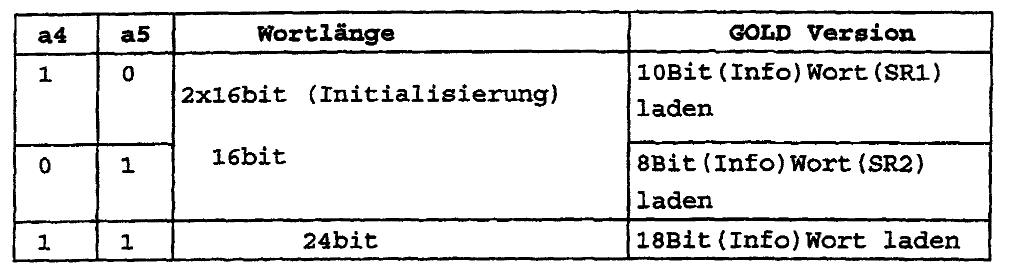

Der Datenausgang des Eingangsschieberegisters ist mit dem Dateneingang des Ausgangsregisters wie folgt verbunden. Der Datenausgang des ersten Schieberegisters SR1 ist mit dem Dateneingang eines ersten Datenregisters DR1, welches ebenso wie das erste Schieberegister SR1 eine Speichertiefe von 8Bit aufweist, verbunden. Zusätzlich ist der Datenausgang des ersten Schieberegisters SR1 mit dem ersten Eingang eines Multiplexers MUX verbunden. Mit dem zweiten Eingang des Multiplexers MUX ist der Datenausgang des zweiten Schieberegisters SR2 verbunden. Der Ausgang des Multiplexers MUX führt auf den Dateneingang des zweiten Datenregisters DR2. Der Datenausgang des dritten Schieberegisters SR3 ist mit dem Dateneingang des dritten Datenregisters DR3 verbunden, welches ebenfalls wie das dritte Schieberegister SR3 eine Speichertiefe von zwei Bit auf weist. Zur Ansteuerung der Freigabeeingänge der drei Datenregister DR1, DR2 und DR3 sind die drei Gatter G1, G2 und G3 vorgesehen, welche über die Bits a4, a5, die Decodiereinheit Dec und einen weiteren Signaleingang gesteuert werden.

Der Multiplexer MUX wird über ein viertes Gatter G4 angesteuert, welches im vorliegenden Ausführungsbeispiel eine Undverknüpfung der Bits a4 und a5 durchführt. Abhängig vom logischen Ausgangszustand des Gatters G4 schaltet der Multiplexer MUX entweder den Datenausgang des ersten Schieberegisters SR1 oder den Datenausgang des zweiten Schieberegisters SR2 auf den Dateneingang des Datenregisters DR2. Beispielsweise kann der Datenausgang des Schieberegisters SR2 mit dem Dateneingang des Datenregisters DR2 verbunden werden, wenn am Steuereingang des Multiplexers MUX und damit am Ausgang des Gatters G4 eine logische "1" anliegt. Bei einer logischen "0" wird dann der Datenausgang des Schieberegisters SR1 mit dem Dateneingang des Datenregisters DR2 verbunden.

Wird ein 24-Bitwort an den Dateneingang DA des Eingangsschieberegisters angelegt, so wird der Multiplexer MUX so angesteuert, daß der Datenausgang des Schieberegisters SR2 mit dem Dateneingang des Datenregisters DR2 verbunden ist. Es kann somit ein 18-Bitwort, welches sich in den Schieberegistern SR1, SR2 und SR3 befindet, direkt in die Datenregister DR1, DR2 und DR3 übernommen werden.

Bei einem 16-Bitwort wird der Multiplexer MUX so angesteuert, daß der Datenausgang des Schieberegisters SR1 mit dem Dateneingang des Datenregisters DR2 verbunden ist. Dadurch können die Daten direkt vom Schieberegister SR1 und dem nachfolgenden 2-Bit-Schieberegister SR3 in die Datenregister DR1 bzw. DR3 übernommen werden. Die 8 Bits des Schieberegisters SR2 und die 8 Bits des Datenregisters DR2 werden nicht genutzt.

Gegenüber der in Figur 1 gezeigten Ausführungsform hat die in Figur 2 gezeigte Ausführungsform den Vorteil, daß die volle Speichertiefe des Ausgangsregisters (18 Bit) genutzt werden kann, obwohl am Dateneingang DA nur 16-Bit breite Worte zur Verfügung stehen. Dies geschieht dadurch, daß die Register zweimal nacheinander beschrieben werden. Zuerst werden die Information (die Daten) des Schieberegisters SR1 und des Schieberegisters SR3 in die beiden Datenregister DR1 und DR3 (8 und 2 Bit) übernommen. Anschließend wird das zweite 16-Bitwort vom Bus über den Dateneingang DA in das Eingangsschieberegister geladen und nur die Daten aus dem Schieberegister SR1 werden über den Multiplexer MUX an das Datenregister DR2 übergeben.

Durch die Ausführungsform gemäß Figur 2 können 24-Bit-Eingangsworte (mit 18-Bit-Nutzdaten und 6-Bit-Steuerdaten) in 18-Bit-Ausgangsdaten umgesetzt werden. Ein 16-Bit-Eingangswort mit 10-Bit-Nutzdaten und 6-Bit-Steuerdaten kann in ein 10-Bit-Ausgangswort umgesetzt werden. Schließlich besteht auch die Möglichkeit zwei 16-Bit-Eingangsworte mit 20-Bit-Nutzdaten und 12-Bit-Steuerdaten in ein 18-Bit-Ausgangswort umzusetzen.

## Patentansprüche

1. Registeranordnung zur wahlweisen Verarbeitung von unterschiedlich langen Eingangsdatenworten,
- bei der ein erstes Schieberegister (SR1), ein zweites Schieberegister (SR2) und ein Steuerschieberegister (STR) vorgesehen sind und ein Eingangsschieberegister bilden, welches einen seriellen Dateneingang (DA) aufweist,
- bei der am Dateneingang (DA) des Eingangsschieberegisters Daten mit verschiedenen Wortlängen anlegbar sind,
- bei der ein Ausgangsregister vorgesehen ist, welches ein erstes Datenregister (DR1) und ein zweites Datenregister (DR2) aufweist, wobei das erste Schieberegister (SR1) mit dem ersten Datenregister (DR1) und über eine Umschalteinheit (MUX) mit dem zweiten Datenregister (DR2) verbunden ist,
- bei der das zweite Schieberegister (SR2) über die Umschalteinheit (MUX) mit dem zweiten Datenregister (DR2) verbunden ist,
- bei der die Umschalteinheit (MUX) wahlweise das erste oder das zweite Schieberegister (SR1, SR2) mit dem zweiten Datenregister (DR2) verbindet, und
- bei der eine Steuerschaltung (G4) vorgesehen ist, die das Steuerschieberegister (STR) mit der Umschalteinheit (MUX) zu deren Ansteuerung koppelt.

2. Registeranordnung nach Anspruch 1,
- bei der das Eingangsschieberegister zusätzlich ein drittes Schieberegister (SR3) aufweist,
- bei der das Ausgangsregister ein drittes Datenregister (DR3) aufweist,
- bei der das dritte Schieberegister (SR3) mit dem dritten Datenregister (DR3) verbunden ist.

3. Registeranordnung nach Anspruch 1 oder 2,
- bei der das Steuerschieberegister (STR) zur Auswahl eines integrierten Schaltkeises (Chip select), des Registerblocks (Block select) im integrierten Schaltkreis und zur Einstellung der Registeranordnung auf die am Dateneingang (DA) vorherrschende Wortlänge (Hi/Hyp GOLD) dient.

4. Verwendung der Registeranordnung nach einem der Ansprüche 1 bis 3,
in einem Mobilfunksystem, welches einen oder mehrere integrierte Bausteine und einen Bus umfaßt.

## Claims

1. Register arrangement for selectively processing input data words of different lengths,
- in which a first shift register (SR1), a second shift register (SR2) and a control shift register (STR) are provided and form an input shift register which has a serial data input (DA),
- in which data having various word lengths can be applied to the data input (DA) of the input shift register,
- in which an output register is provided which has a first data register (DR1) and a second data register (DR2), the first shift register (SR1) being connected to the first data register (DR1) and being connected to the second data register (DR2) via a changeover unit (MUX),
- in which the second shift register (SR2) is connected to the second data register (DR2) via the changeover unit (MUX),
- in which the changeover unit (MUX) selectively connects the first or the second shift register (SR1, SR2) to the second data register (DR2), and
- in which a control circuit (G4) is provided which couples the control shift register (STR) to the changeover unit (MUX) in order to actuate the latter.

2. Register arrangement according to Claim 1,
- in which the input shift register additionally has a third shift register (SR3),
- in which the output register has a third data register (DR3),
- in which the third shift register (SR3) is connected to the third data register (DR3).

3. Register arrangement according to Claim 1 or 2,
- in which the control shift register (STR) is used to select an integrated circuit (Chip select), the register block (Block select) in the integrated circuit and to set the register arrangement to the word length (Hi/Hyp GOLD) prevailing at the data input (DA).

4. Use of the register arrangement according to one of Claims 1 to 3,
in a mobile radio system which comprises one or more integrated modules and a bus.

## Revendications

1. Dispositif à registre permettant de traiter au choix des mots de données d'entrée de longueurs différentes,
- dans lequel il est prévu un premier registre (SR1) à décalage, un deuxième registre (SR2) à décalage et un registre (STR) à décalage de commande qui forment un registre à décalage d'entrée qui a une entrée (DA) série de données,
- dans lequel peuvent être appliquées à l'entrée (DA) de données du registre à décalage d'entrée des données ayant des longueurs de mots différentes,
- dans lequel il est prévu un registre de sortie qui a un premier (DR1) de données et un deuxième registre (DR2) de données, le premier registre (SR1) à décalage étant relié au premier registre (DR1) de données et par une unité (MUX) de commutation au deuxième registre (DR2) de données,
- dans lequel le deuxième registre (SR2) à décalage est relié par l'unité (MUX) de commutation au deuxième registre (DR2) de données,
- dans lequel l'unité (MUX) de commutation relie au choix le premier ou le deuxième registre (SR1, SR2) à décalage au deuxième registre (DR2) de données et
- dans lequel il est prévu un circuit (G4) de commande qui couple le registre (STR) à décalage de commande à l'unité (MUX) de commutation pour sa commande.

2. Dispositif à registre suivant la revendication 1,
- dans lequel le registre à décalage d'entrée a en plus un troisième registre (SR3) à décalage,
- dans lequel le registre de sortie a un troisième registre (DR3) de données,
- dans lequel le troisième registre (SR3) à décalage est relié au troisième registre (DR3) de données.

3. Dispositif à registre suivant la revendication 1 ou 2,
- dans lequel le registre (STR) à décalage de commande sert à choisir un circuit intégré (Chip select), le bloc de registre (Block select) dans le circuit intégré et à régler le dispositif à registre sur les longueurs de mot (Hi/Hyp GOLD) régnant à l'entrée (DA) de données.

4. Utilisation du dispositif à registre suivant l'une des revendications 1 à 3,
dans un système de téléphone mobile qui comprend un ou plusieurs modules intégrés et un bus.
